(19)

**Europäisches Patentamt**
**European Patent Office**
**Office européen des brevets**

(11) **EP 1 223 576 B1**

(12) **EUROPEAN PATENT SPECIFICATION**

(45) Date of publication and mention
of the grant of the patent:
**29.07.2009 Bulletin 2009/31**

(51) Int Cl.:
***G11B 7/135*** (2006.01)

(21) Application number: **01306958.8**

(22) Date of filing: **16.08.2001**

(54) **Optical pickup capable of detecting thickness variation of recording medium, and/or capable of compensating for spherical aberration caused by thickness variation of recording medium**

Optisches Abtastgerät mit der Fähigkeit zur Detektion der Dickenänderung eines Aufzeichnungsmediums, und/oder mit der Fähigkeit zur Korrektur der durch die Dickenänderung eines Aufzeichnungsmediums verursachten sphärischen Aberration

Tête de lecture optique capable de détecter la variation d'épaisseur d'un support d'enregistrement, et/ou capable de corriger l'aberration sphérique causée par la variation d'épaisseur d'un support d'enregistrement

(84) Designated Contracting States:
**DE FR GB NL**

(30) Priority: **28.12.2000 KR 2000084211**

(43) Date of publication of application:
**17.07.2002 Bulletin 2002/29**

(73) Proprietor: **SAMSUNG ELECTRONICS CO., LTD.**
**Suwon-City, Kyungki-do (KR)**

(72) Inventors:
• **Chung, Chong-sam**
**Paldal-gu,**
**Suwon-si,**
**Gyeonggi-do (KR)**
• **Ahn, Young-man**
**Paldal-gu,**
**Suwon-si,**
**Gyeonggi-do (KR)**

• **Kim, Tae-kyung**
**Paldal-gu, Suwon-city,Kyungki-do 442-470 (KR)**
• **Suh, Hae-jung**
**Seongnam-si,**
**Gyeonggi-do (KR)**

(74) Representative: **Rooney, John-Paul et al**
**Appleyard Lees**
**15 Clare Road**
**Halifax**
**HX1 2HY (GB)**

(56) References cited:
**EP-A- 0 984 440          EP-A2- 0 953 974**
**EP-A2- 1 115 110         EP-A2- 1 130 581**
**WO-A-00/39792           WO-A-99/18466**
**US-A1- 2001 028 614      US-A1- 2001 040 853**

EP 1 223 576 B1

**Description**

The present invention relates to an optical pickup, and more particularly, to an optical pickup capable of detecting thickness variation of a recording medium, and/or capable of compensating for spherical aberration caused by the thickness variation of a recording medium.

In general, information recording/reproduction density increases as the size of a spot focused on a recording medium by an optical pickup apparatus becomes smaller. The shorter the wavelength ($\lambda$) of light used and the larger the numerical aperture (NA) of an objective lens, the smaller the size of light spot, which is expressed by equation (1):

$$Size\ of\ light\ spot\ \alpha\ \lambda/NA \qquad\qquad ...(1)$$

To reduce the size of light spot focused on the recording medium for a higher recording density, there is a need to construct an optical pickup with a short wavelength light source, such as a blue semiconductor laser, and an objective lens having a larger NA. Currently of interest in this technical field is a format for increasing recording capacity up to 22.5 GB with a 0.85-NA objective lens, and for reducing the thickness of a recording medium to 0.1 mm so as to prevent degradation of performance caused by tilting of the recording medium. Here, the thickness of recording medium means the distance from a light incident surface of the recording medium to an information recording surface.

As shown in equation (2) below, spherical aberration $W_{40d}$ is proportional to the fourth power of the NA of the objective lens and to the deviation of the thickness of recording medium. For this reason, if an objective lens with a high NA of about 0.85 is adopted, the recording medium must have a uniform-thickness with a deviation less than $\pm$ 3 $\mu$m. However, it is very difficult to manufacture the recording medium within the above thickness deviation range.

$$W_{40} = \frac{n^2 - 1}{8n^3}(NA)^4\Delta d \qquad\qquad ...(2)$$

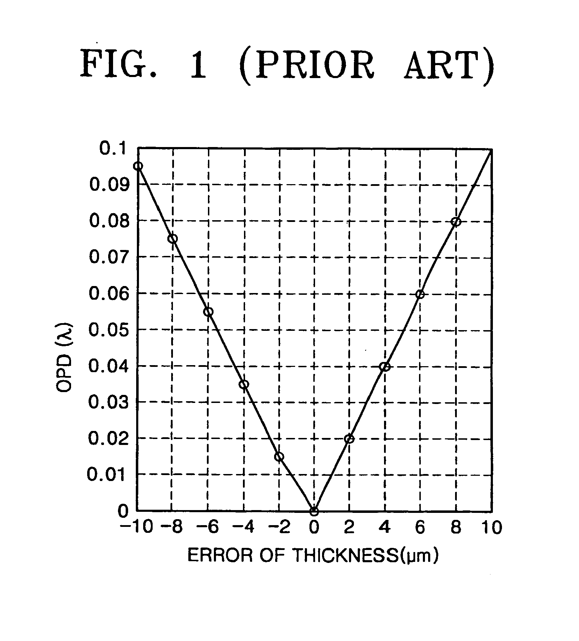

Figure 1 is a graph showing the relation between thickness deviation of the recording medium and wavefront aberration (optical path difference (OPD)) caused by the thickness deviation when a 400-nm light source and an objective lens having an NA of 0.85 are used. As shown in Figure 1, the wavefront aberration increases in proportion to the thickness deviation. Thus, when the objective lens having a high NA, for example, an NA of 0.85, is adopted, there is a need to correct for spherical aberration caused by the thickness deviation of the recording medium.

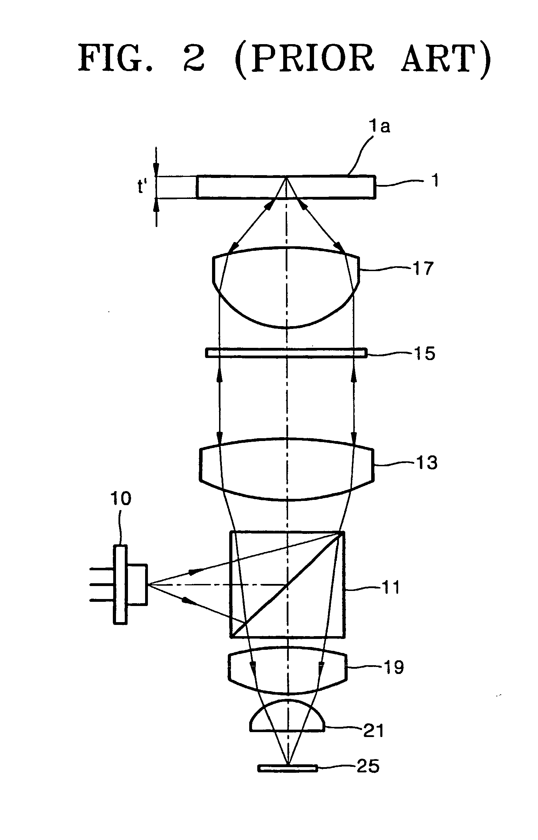

Figure 2 shows a conventional optical pickup capable of detecting variation of the thickness of an optical disc, which is disclosed in Japanese Patent Laid-open Publication No. hei 12-57616. Referring to Figure 2, the conventional optical pickup includes a light source 10 for emitting a light beam, a polarization beam splitter 11 for transmitting or reflecting an incident light beam according to its polarization, a quarter-wave plate 15 for changing the polarization of an incident light beam, an objective lens 17 for focusing an incident light beam to form a light spot on the recording surface 1a of an optical disc 1, a cylindrical astigmatism lens 21 having astigmatism affecting the light beam passed back through the objective lens 17, the quarter-wave plate 15, and the polarization beam splitter 11 after having been reflected from the recording surface 1a of the optical disc1, and a photodetector 25 for receiving the light beam from the astigmatism lens 21. The conventional optical pickup further includes a collimating lens disposed between the polarization beam splitter 11 and the quarter-wave plate 15, for collimating an incident diverging light beam from the light source, and a condensing lens 19 disposed between the polarization beam splitter 11 and the astigmatism lens 21.

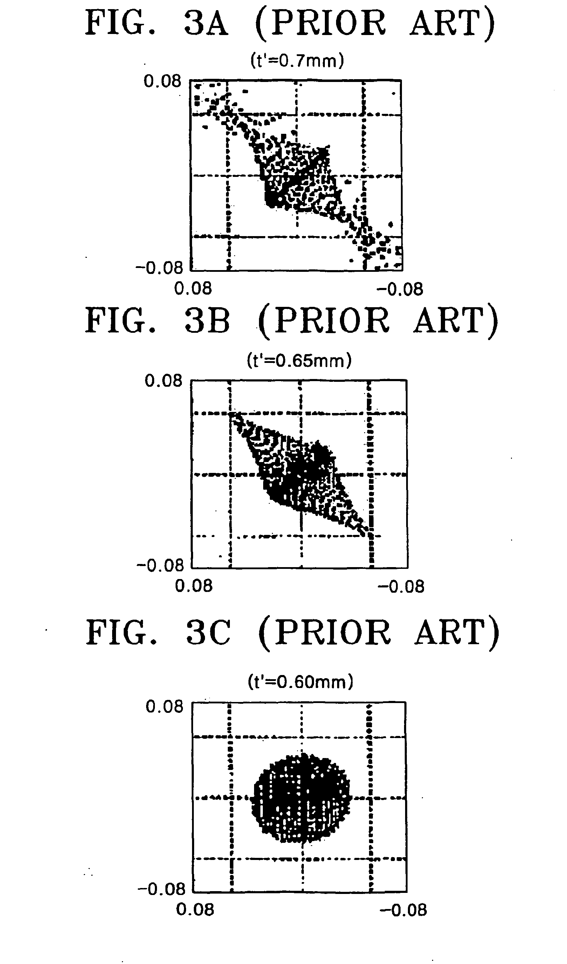

Since the conventional optical pickup has the astigmatism lens 21 which causes astigmatism to enable focus error signal detection, the intensity distribution of light passed through the astigmatism lens 21 after having been reflected from the recording surface 1a of the optical disc 1 varies according to the thickness $t$ of the optical disc, as shown in Figures 3A through 3E. Figures 3A through 3E illustrate the intensity distribution of light passed through the astigmatism lens 21 and heading toward the photodetector 25, when the optical disc 1 adopted has a thickness of 0.70 mm, 0.65 mm, 0.60 mm, 0.55 mm, and 0.50 mm, respectively, and the optical pickup of Figure 2 is designed for a 0.6-mm thick optical disc.

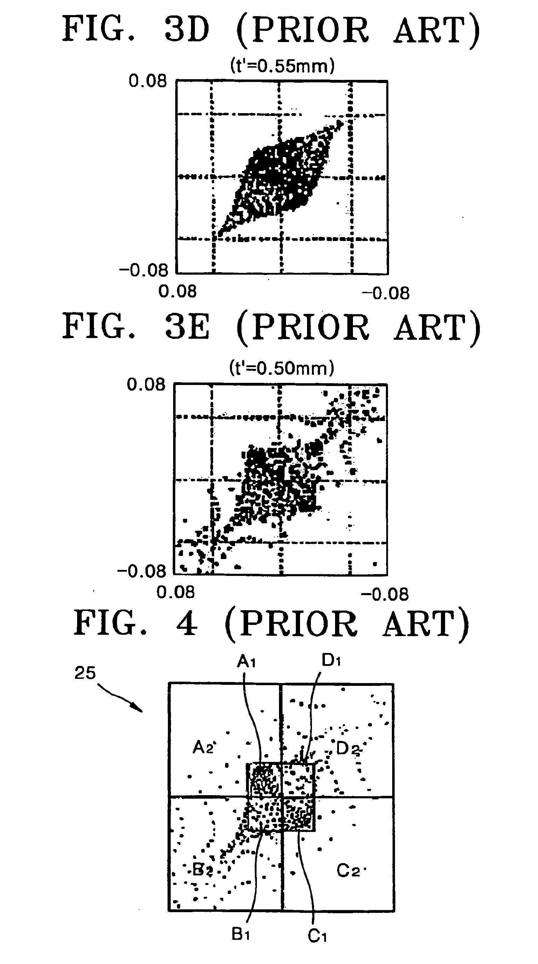

Referring to Figure 3C, when the optical disc 1 has a thickness of 0.60 mm, which is the level of reference with respect to the other thickness levels (hereinafter, referred to as the reference thickness), the intensity distribution of light entering the photodetector 25 is circular due to no occurrence of spherical aberration, and is symmetrical around the center point. When the thickness of the optical disc 1 deviates from 0.60 mm, spherical aberration occurs as a result of the thickness deviation, and the intensity distribution of light passed through the astigmatism lens 21 and received by the photodetector 25 is asymmetrical about the center point, as illustrated in Figures 3A, 3B, 3D and 3E.

The photodetector 25 detects the variation of thickness of the optical disc 1 from the variation of intensity distribution of the received light. To this end, the photodetector 25 includes first through fourth inner sections $A_1$, $B_1$, $C_1$ and $D_1$, and first through fourth outer sections $A_2$, $B_2$, $C_2$ and $D_2$ surrounding the first through fourth inner sections $A_1$, $B_1$, $C_1$ and $D_1$.

In a conventional optical pickup having the configuration described above, a thickness variation signal for the optical disc 1 is detected by subtracting the sum ($a2+c2+b1+d1$) of the detection signals $a2$ and $c2$ of the first and third outer sections $A_2$ and $C_2$ in one diagonal direction of the photodetector 25, and the detection signals $b1$ and $d1$ of the second and fourth inner sections $B_1$ and $D_1$ in the other diagonal direction, from the sum ($a1+c1+b2+d2$) of the detection signals a1 and c1 of the first and third inner sections A1 and C1 in the one diagonal direction, and the detection signals b2 and d2 of the second and fourth outer sections B2 and D2 in the other diagonal direction. In other words, a thickness variation signal St' for an optical disc can be detected from the detection signals a1, b1, c1 and d1 of the first through fourth inner sections A1, B1, C1 and D1 of the photodetector 25, and the detection signals a2, b2, c2 and d2 of the first through fourth outer sections A2, B2, C2 and D2, by using the following equation:

$$St' = (a1 + c1 + b2 + d2) - (a2 + c2 + b1 + d1) \ldots 3$$

However, this mechanism of detecting variation of the thickness of an optical disc can be applied to only optical pickups adopting a lens with astigmatism. In other words, if an optical pickup does not include an astigmatism lens, thickness variation of an optical disc used with the optical pickup cannot be detected.

WO 99/18466 discloses an optical pickup that uses a beam splitter to partition and deflect a light beam onto a plurality of photodetectors to compensate for spherical aberration of an optical disc. The pre-characterising portions of the claims appended hereto are based on this document.

WO 00/39792 and EP 0 984 440 disclose other optical pickups.

An aim of the present invention to provide an optical pickup capable of detecting variation of the thickness of a recording medium, and/or capable of compensating for spherical aberration caused by the thickness variation of a recording medium, without including an astigmatism lens for causing astigmatism at the light receiving side.

According to one aspect of the present invention, there is provided an optical pickup comprising: a light source for generating and emitting a light beam; an objective lens for focusing an incident light beam from the light source to form a light spot on a recording medium; an optical path changer disposed on the optical path between the light source and the objective lens, for altering the traveling path of an incident light beam; **characterized in that:** the light beam division and detection means is a photodetector constructed to divide the cross section of a light beam passed through the objective lens and the optical path changer after having been reflected from the recording medium into a first light beam portion corresponding to the central optical axis and a second light beam portion around the first light beam portion, and to separately detect first and second detection signals from the first and second light beam portions; and a thickness variation detection circuit for detecting a variation of thickness of the recording medium by subtracting the second detection signal from the first detection signal.

Preferably, the light beam division and detection means may be a photodetector having first and second light receiving portions for dividing the incident light beam into the first and second light beam portions, receiving the first and second light beam portions, and separately and photoelectrically converting the first and second light beam portions.

Preferably, the light beam division and detection means comprises: a light beam divider for dividing the incident light beam into the first and second light beam portions; and first and second photodetectors for receiving the first and second light beam portions from the light beam divider, and photoelectrically converting the first and second light beam portions, respectively.

In another embodiment, the present invention provides an optical pickup comprising: a light source for generating and emitting a light beam; an objective lens for focusing an incident light beam from the light source to form a light spot on a recording medium; an optical path changer disposed on the optical path between the light source and the objective lens, for altering the traveling path of an incident light beam; **characterized in that**: the light beam division and detection means is a photodetector constructed to separately divide the cross section of a light beam passed through the objective lens and the optical path changer after having been reflected from the recording medium into a first light beam portion aligned on the optical axis and second and third light beam portions around the first light beam portion, and to separately detect first, second and third detection signals from the first, second and third light beam portions; and a thickness variation detection circuit for detecting a variation of thickness of the recording medium by subtracting the sum of the second and third detection signals from the first detection signal.

It is preferable that the light beam division and detection means is a photodetector having first, second and third light receiving portions for dividing the incident light beam into the first, second and third light beam portions, receiving the first, second and third light beam portions, and separately and photoelectrically converting the first, second and third light beam portions.

It is preferable that the light beam division and detection means comprises: a light beam divider for dividing the incident light beam into the first, second photodetectors for receiving the first, second and third light beam portions from the light beam divider, and photoelectrically converting the first, second and third light beam portions, respectively.

The optical pickups according to the present invention may further comprises a spherical aberration compensation element on the optical path between the optical path changer and the objective lens, for compensating for spherical aberration caused by thickness variation of the recording medium by being driven according to a thickness variation signal produced by the thickness variation detection circuit.

The optical pickups according to the present invention may further comprises: a collimating lens on the optical path between the light source and the objective lens, for collimating a diverging light beam from the light source; and an actuator for actuating the collimating lens according to a thickness variation signal detected by the thickness variation detection circuit, such that spherical aberration caused by the thickness variation of the recording medium is compensated for.

For a better understanding of the invention, and to show how embodiments of the same may be carried into effect, reference will now be made, by way of example, to the accompanying diagrammatic drawings in which:

Figure 1 is a graph showing the relation between thickness deviation of a recording medium and wavefront aberration (optical path difference (OPD)) caused by the thickness deviation;

Figure 2 illustrates a conventional optical pickup capable of detecting thickness variation of an optical disc, which is disclosed in Japanese Patent Laid-open Publication No. hei 12-57616;

Figures 3A through 3E illustrate the distribution of light entering the photodetector of the optical pickup of Figure 2, which is designed for 0.60-mm thick optical discs, when the optical disc has a thickness of 0.70 mm, 0.65 mm, 0.60 mm, 0.55 mm, and 0.50 mm, respectively;

Figure 4 is a plan view illustrating the configuration of the photodetector shown in Figure 2;

Figure 5 shows a preferred embodiment of an optical pickup according to the present invention;

Figures 6A through 6C, and Figures 7A through 7C illustrate the intensity distribution and the phase distribution, respectively, of a light beam passed back through the objective lens and the optical path changer after having been reflected from the recording medium, with respect to variations of thickness of the recording medium, when the optical pickup of Figure 5 is designed for 0.1-mm thick recording media, the objective lens has a NA of 0.85, and the light source emits a 400-nm beam;

Figure 8 illustrates preferred embodiments of the photodetector of Figure 5 and a thickness variation detection circuit;

Figure 9 illustrates another embodiment of the thickness variation detection circuit of Figure 8;

Figure 10 illustrates other embodiments of the photodetector and the thickness variation detection circuit of Figure 5;

Figure 11 is a graph of the thickness variation signal and the sum of the first and second detection signals of the first and second light receiving portions of the photodetector when the photodetector of the optical pickup according to the present invention has the configuration of Figure 8;

Figure 12 is a graph of the thickness variation signal for the recording medium and the sum of the first, second and third detection signals of the first, second and third light receiving portions of the photodetector when the photodetector of the optical pickup according to the present invention has the configuration of Figure 10;

Figure 13 illustrates another preferred embodiment of the optical pickup according to the present invention;

Figure 14 illustrates another preferred embodiment of the optical pickup according to the present invention;

Figure 15 is a plan view showing the structure of the light beam divider of Figure 14;

Figure 16 illustrates another preferred embodiment of the optical pickup according to the present invention; and

Figure 17 is a plan view showing the structure of the light beam divider of Figure 16.

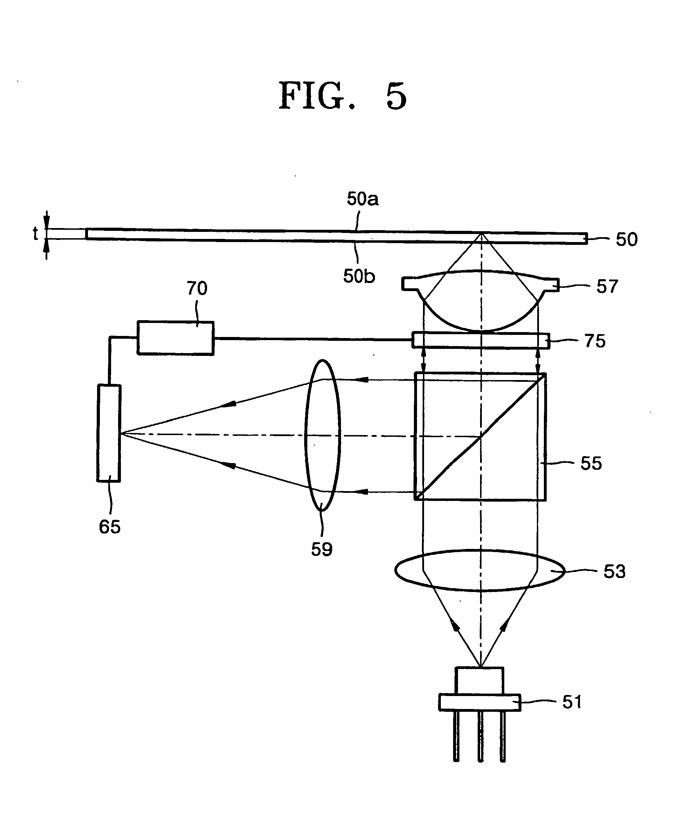

A preferred embodiment of an optical pickup according to the present invention is illustrated in Figure 5. Referring to Figure 5, the optical pickup includes a light source 51 for generating and emitting a light beam, an objective lens 57 for focusing an incident light beam from the light source 51 to form a light spot on an information recording surface 50a of a recording medium 50, an optical path changer disposed on the optical path between the light source 51 and the objective lens 57, for altering the traveling path of an incident light beam, a photodetector 65 for dividing and detecting the light beam passed back through the objective lens 57 and the optical path changer after having been reflected from the recording medium 50, and a thickness variation detection circuit 70 for detecting variation of the thickness of the recording medium 50 from a plurality of detection signals output from the photodetector 65. Here, the thickness t of the recording medium 50 means the distance from the light incident surface 50b of the recording medium 50 to the information recording surface 50a. Thickness variation refers to both thickness deviation according to position on one recording medium and a difference in thickness between different optical discs.

The light source 51 may be a semiconductor laser such as an edge emitting laser or a vertical cavity surface emitting laser (VCSEL). As the optical path changer, a beam splitter 55 for transmitting and reflecting an incident light beam in a predetermined ratio can be adopted. Alternatively, the optical path changer may include both a polarization beam splitter (not shown) for selectively transmitting or reflecting an incident light beam according to its polarization, and a quarter-wave plate (not shown) disposed on the optical path between the polarization beam splitter and the objective lens 57, for changing the phase of an incident light beam.

To use the optical pickup according to the present invention for recording and reproduction with a next generation digital versatile disc (DVD), so-called "high-definition (HD)-DVD" family recording medium, it is preferable that a blue-light semiconductor laser which emits a light beam having a wavelength of about 400-420 nm, preferably, a wavelength of about 405 nm, is adopted as the light source 51, and a lens having a numerical aperture (NA) of 0.7 or more, preferably, an NA of 0.85, is adopted as the objective lens 57.

It is preferable that the optical pickup according to the present invention further includes a collimating lens 53 on the optical path between the light source 51 and the beam splitter 55, for collimating a diverging light beam emitted from the light source 51, and a sensing lens 59 on the optical path between the beam splitter 55 and the photodetector 65, for condensing an incident light beam. The distance between the sensing lens 59 and the photodetector 65 is determined such that the light spot received by the photodetector 65 has an appropriate size, for example, has a diameter of about 100 $\mu$m.

The photodetector 65 as a light beam division and detection means is constructed such that it is able to divide and detect the light beam passed back through the objective lens 57 and the optical path changer after having been reflected from the recording medium, taking into account variation in the intensity distribution of the light beam according to thickness variation of the recording medium 50.

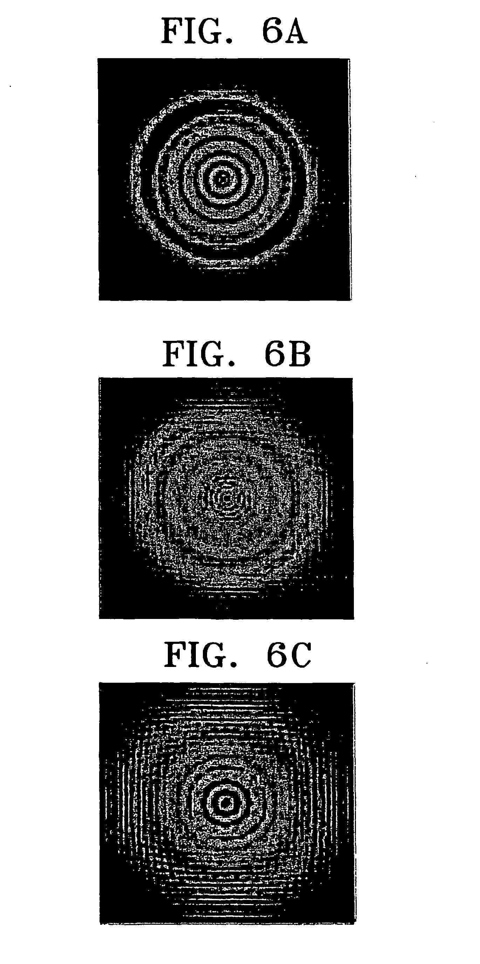

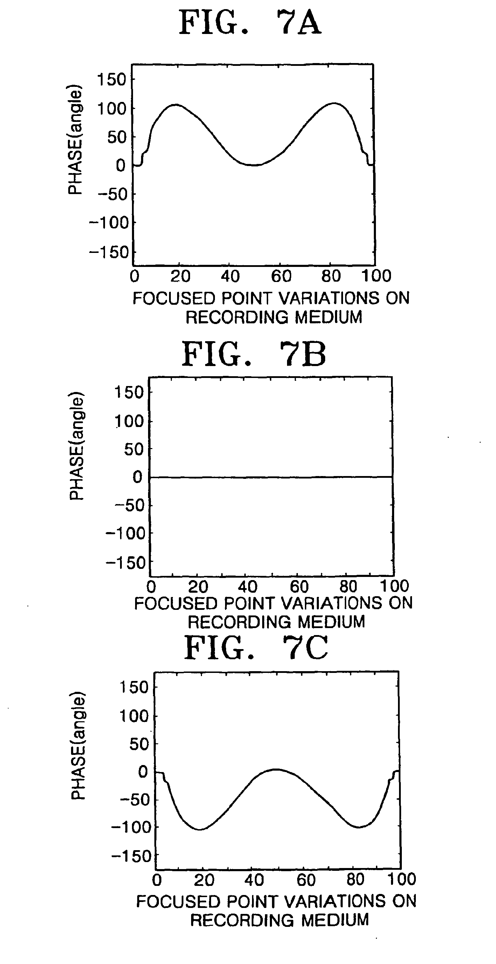

For example, it is assumed that the objective lens 57 has a NA of 0.85, the optical pickup is designed for the recording medium 50 having a thickness of 0.1 mm, and the light source 51 emits a 400-nm light beam. For this case, the intensity distribution and phase distribution of light beam LB passed back through the objective lens 57 and the optical path changer after having been reflected from the recording medium 50 with respect to the variation of thickness of the recording medium 50 are shown in Figures 6A through 6C, and Figures 7A through 7C. In particular, Figure 6A illustrates the intensity distribution of light passed through the optical path changer after having been reflected from the recording medium 50 which is 10 $\mu$m thinner than 0.1 mm thickness for which the optical pickup is designed (hereinafter referred to as the reference thickness), and Figure 7A illustrates the phase distribution of the light beam of Figure 6A. Figure 6B illustrates the distribution of light for the recording medium 50 having the reference thickness of 0.1 mm, and Figure 7B shows the phase distribution of the light beam of Figure 6B. Figure 6C illustrates the distribution of light for the recording medium 50 which is 10 $\mu$m thicker than the reference thickness, and Figure 7C illustrates the phase distribution of the light beam of Figure 6C.

Referring to Figures 6A and 7A, when a portion of the recording medium 50 which the light beam is focused on is thinner than the reference thickness, the intensity distribution of the light beam is weaker at the central axis, and increases with increased distance from the central axis. Also, the phase distribution of the light beam appears like twin peaks symmetrical with respect to the central axis. Referring to Figures 6B and 7B, when a portion of the recording medium 50 which the light beam is focused on has the reference thickness, the intensity distribution of light is uniform across the light beam, and phase distribution is uniform. Referring to Figures 6C and 7C, when a portion of the recording medium 50 which the light beam is focused on is thicker than the reference thickness, the intensity distribution and phase distribution of the light beam are inversed with respect to those of Figures 6A and 7A.

As illustrated in Figures 6A through 6C, and Figures 7A through 7C, the intensity distribution and phase distribution of the light beam according to the thickness variations of the recording medium 50 vary symmetrically around the central axis and are opposite with respect to inversed thickness variations. Furthermore, variations in the distribution and phase spectrum of the light beam caused by an increase in the thickness of the recording medium above the reference thickness are opposite to those by a decrease in the thickness of the recording medium below the reference thickness.

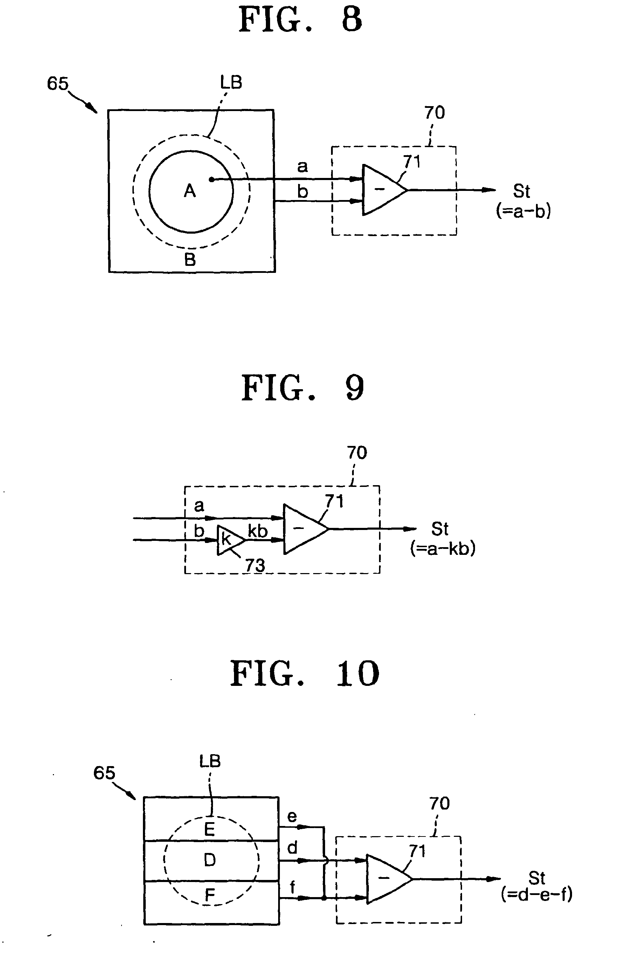

For this reason, it is preferable that the photodetector 65 is constructed such that it separately detects the incident light beam into a portion of LB on the optical axis and a portion in the periphery. For example, as shown in Figure 8, the photodetector 65 may include first and second light receiving portions A and B for dividing the incident light beam LB into a first light beam portion corresponding to the central optical axis, and a second light beam portion around the first light beam portion, and for photoelectrically converting the first and second light beam portions. In this case, the first light receiving portion A of the photodetector 65 may have a circular or rectangular form which allows division of the incident light beam LB into the first light beam portion corresponding to the central optical axis, and the second light beam portion around the first light beam portion, and separate detection of the two portions.

When the photodetector 65 includes the first and second light receiving portions A and B, as shown in Figure 8, the thickness variation detection circuit 70 is constructed with a subtractor 71 for subtracting a second detection signal $b$ of the second light receiving portion B from a first detection signal $a$ of the first light receiving portion A and outputting the result of the subtraction as a thickness variation signal St for the recording medium 50. In this case, as shown in Figure 9, the thickness variation detection circuit 70 may further comprise a gain controller 73 for amplifying at least one of the first and second detection signals $a$ and $b$ with a predetermined gain factor $k$ prior to the subtraction by the subtractor 71, such that offset of the thickness variation signal St can be adjusted.

Alternatively, as shown in Figure 10, the photodetector 65 may include first, second and third light receiving portions D, E and F for separately dividing the incident light beam LB into a first light beam portion aligned on the optical axis, and second and third light beam portions around the first light beam portion of the incident light beam LB, and for separately and photoelectrically converting the light beam portions. The first, second and third light receiving portions D, E and F may be arranged in a direction corresponding to either the tangential or radial direction of the recording medium 50.

When the photodetector 65 is constructed as illustrated in Figure 10, the thickness variation detection circuit 70 detects the variation of thickness of the recording medium 50 by subtracting the sum of the second and third detection signals $e$ and $f$ of the second and third light receiving portions E and F from the first detection signal $d$ of the first light receiving portion D. As illustrated in Figure 9, the thickness variation detection circuit 70 may be constructed such that it is able to amplify at least one of the first, second and third detection signals $d$, $e$ and $f$ with a predetermined gain factor $k$, and then to process the detection signals, so that offset of the thickness variation signal can be adjusted.

For the photodetector 65 illustrated in Figures 8 and 10, the size of the first light receiving portions A and D is determined such that they receive 10-90% of the entire incident light beam.

Turning back to Figure 5, the optical pickup according to the present invention may further include a spherical aberration compensation element 75 on the optical path between the optical path changer and the objective lens 57, which is driven according to the thickness variation signal St produced by the thickness variation detection circuit 70, thereby compensating for spherical aberration caused by thickness variation of the recording medium 50.

As the spherical aberration compensation element 75, a liquid crystal plate manufactured by injecting liquid crystals between two sheets of transparent substrates having electrode patterns can be used. Due to the anisotropic property of liquid crystal with respect to refractive index, the phase of the light beam passing through the liquid crystal plate changes. In particular, the liquid crystal plate is driven according to the thickness variation signal St such that the shape of the wavefront of the light beam passing the liquid crystal plate is changed into the inverse shape of spherical aberration caused by the thickness variation of the recording medium 50, thereby compensating for the spherical aberration caused by the thickness variation of the recording medium 50. In this case, a driving circuit for driving the spherical aberration compensation element 75 may be included in or separately from the thickness variation detection circuit 70.

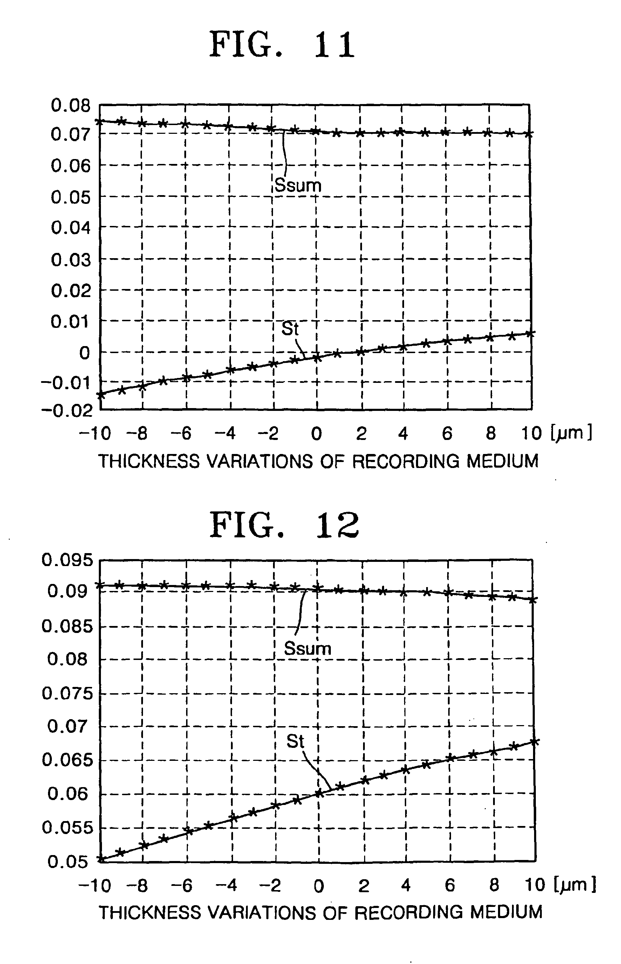

Figure 11 is a graph of the thickness variation signal St and the sum Ssum of the first and second detection signals $a$ and $b$ of the first and second light receiving portions A and B of the photodetector 65 versus the thickness variation of the recording medium 50 when the photodetector 65 of the optical pickup of the present invention has the configuration of Figure 8. Figure 12 is a graph of the thickness variation signal St and the sum Ssum of the first, second and third detection signals $d$, $e$ and $f$ of the first, second and third light receiving portions D, E and F of the photodetector 65 versus the thickness variation of the recording medium 50, when the photodetector 65 of the optical pickup of the present invention has the configuration of Figure 10. As shown in Figures 11 and 12, the variation of the thickness variation signal St detected by the thickness variation detection circuit 70 with respect to the thickness variation of the recording medium 50 is relatively larger than the variation of the sum Ssum of the detection signals detected by the photodetector 65.

As described with reference to Figures 11 and 12, the variation of thickness of the recording medium 50 can be detected by the optical pickup of the present invention. Thus, the spherical aberration caused by the thickness variation of the recording medium 50 can be corrected by driving the spherical aberration compensation element 75 according to the thickness variation signal St.

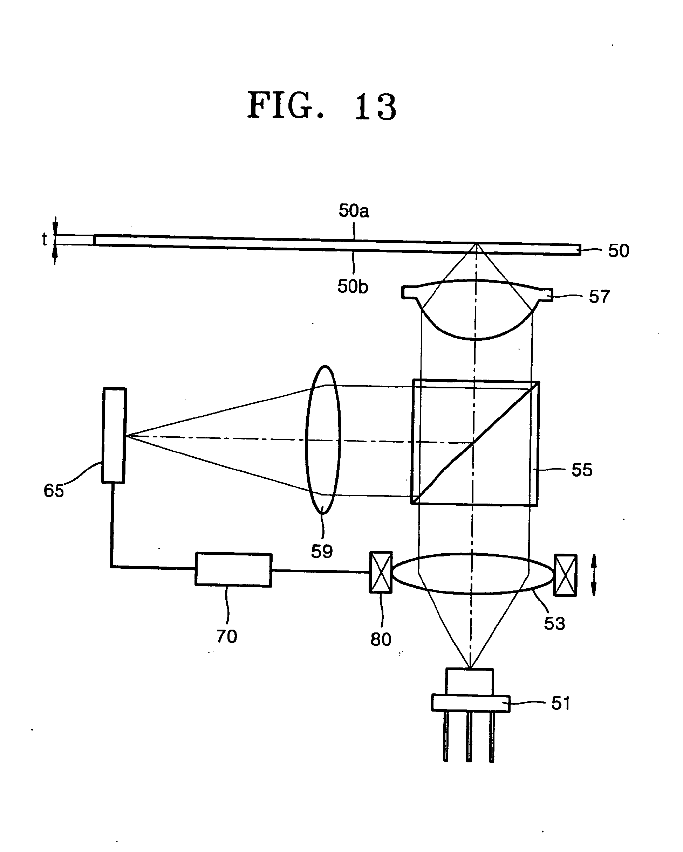

Meanwhile, for the purpose of compensating for spherical aberration caused by thickness variation of the recording medium 50, the optical pickup according to the present invention may include an actuator 80 capable of actuating the collimating lens 53 along the optical axis according to the thickness variation signal St produced by the thickness variation detection circuit 70, as shown in Figure 13, instead of the spherical aberration correction element 75 of Figure 5.

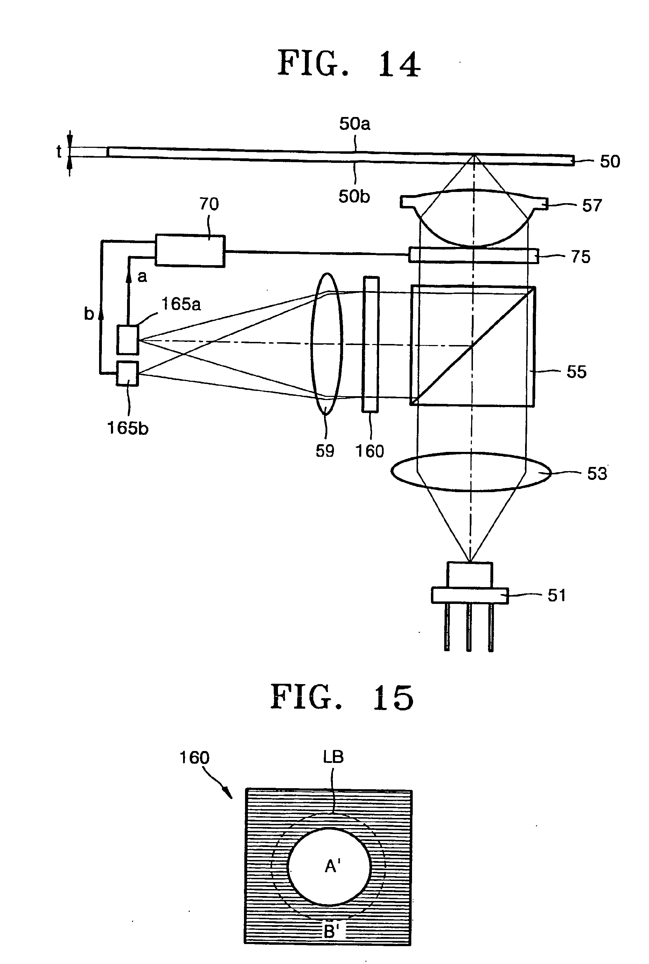

Figure 14 illustrates another embodiment of the optical pickup according to the present invention. In the present embodiment, instead of the photodetector 65 having the divided configuration shown in Figure 8, a light beam divider 160, and first and second photodetectors 165a and 165b are used as a light beam division and detection means. In Figure 14, the same elements as in Figure 5 are denoted by the same reference numerals, and descriptions thereof will not be provided here.

The light beam divider 160 includes first and second sections A' and B' as shown in Figure 15 for dividing the incident light beam LB into a first light beam portion on the optical axis, and a second light beam portion around the first light beam portion. The first section A' directly transmits, for example, the first light beam portion of the incident light beam LB, or diffracts the same into $0^{th}$-order beam, so that the transmitted or diffracted light beam is received by the first photodetector 165a. The second section B' diffracts, for example, the second light beam portion of the incident light beam LB so that a $+1^{st}$-order or $-1^{st}$ order beam is received by the second photodetector 165b. As the light beam divider 160, a hologram optical element (HOE), which has in the first section A' a through hole, direct transmit portion, or hologram pattern for diffracting an incident light beam and transmitting a resulting $0^{th}$-order beam, and has in the second section B' a hologram pattern for diffracting an incident light beam and transmitting a resulting $+1^{st}$-order or $-1^{st}$-order beam.

In the optical pickup according to the embodiment of the present invention shown in Figure 14, the principle of detecting the thickness variation signal St for the recording medium 50 from the first and second detection signals *a* and *b* of the first and second photodetectors 165a and 165b, and correcting the spherical aberration caused by the thickness variation of the recording medium 50 by driving the spherical aberration compensation element 75 according to the thickness variation signal St, is the same as in the previous embodiments. Alternatively, the optical pickup of Figure 14 may include the actuator 80 for actuating the collimating lens 53 along the optical axis, as shown in Figure 13, thereby compensating for spherical aberration caused by thickness variation of the recording medium 50.

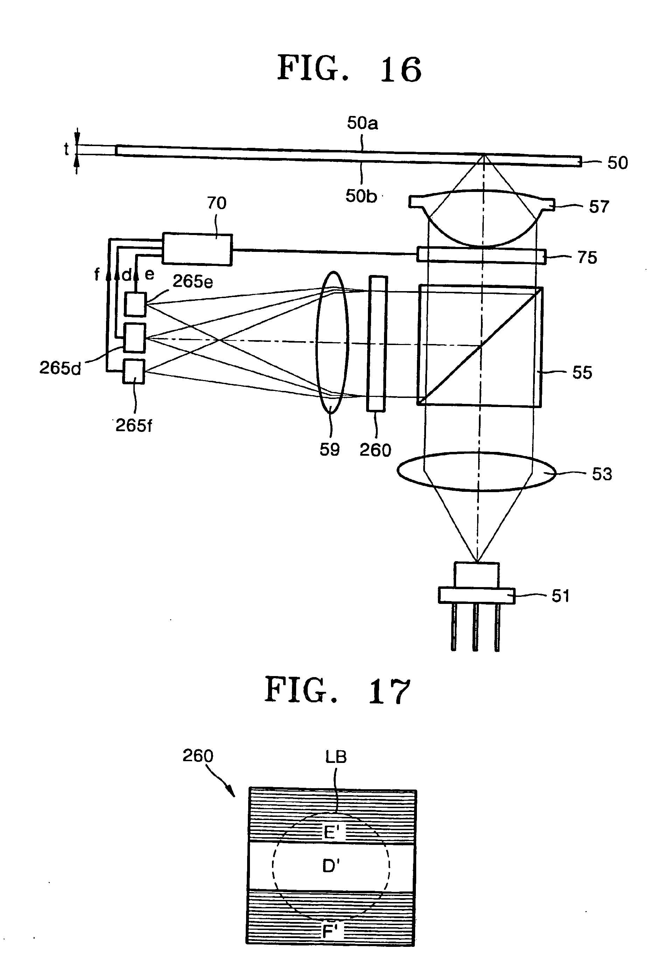

Figure 16 illustrates another preferred embodiment of the optical pickup according to the present invention. In the present embodiment, instead of the photodetector 65 having the divided configuration shown in Figure 10, a light beam divider 260, and first, second and third photodetectors 265d, 265e and 265f are used as a light beam division and detection means. In Figure 16, the same elements as in Figure 5 are denoted by the same reference numerals, and descriptions thereof will not be provided here.

In the embodiment shown in Figure 16, the light beam divider 260 includes first, second and third sections D', E' and F', as shown in Figure 17, for dividing the incident light beam LB into a first light beam portion on the optical axis, and second and third light beam portions around the first light beam portion, based on a principle similar to the light beam divider 160 of Figure 15. The first section D' directly transmits, for example, the first light beam portion of the incident light beam LB, or diffracts the same and transmits the resulting $0^{th}$-order beam, so that the transmitted or diffracted light beam is received by the first photodetector 265d. The second section E' diffracts, for example, the second light beam portion of the incident light beam LB so that the $+1^{st}$-order or $-1^{st}$ order diffracted light beam is received by the second photodetector 265e. The third section F' diffracts, for example, the third light beam portion of the incident light beam LB so that the $-1^{st}$-order or $+1^{st}$ order diffracted light beam is received by the third photodetector 265f. As the light beam divider 160, an HOE, which has in the first section D' a through hole, direct transmit portion, or hologram pattern for diffracting an incident light beam, and has in both the second and third sections E' and F' a hologram pattern for diffracting an incident light beam, can be used.

In the optical pickup according to the embodiment of the present invention shown in Figure 16, the principle of detecting the thickness variation signal St for the recording medium 50 from the first, second and third detection signals *d, e* and *f* of the first, second and third photodetectors 265d, 265e and 265f, and compensating for the spherical aberration caused by thickness variation of the recording medium 50 by driving the spherical aberration compensation element 75 or the collimating lens 53 according to the detected thickness variation signal St is the same as in the previous embodiments.

As described above, in the optical pickups according to the present invention, a single photodetector having a divided configuration, or a light beam divider and a plurality of photodetectors is used as a light beam division and detection means, so that the light beam passed through the objective lens and the optical path changer after having been reflected from the recording medium is divided and detected by the light beam division and detection means, taking into account variation in the intensity distribution of light caused by thickness variation of the recording medium. The thickness variation signal is detected by processing the detection signals output from the photodetector. Thus, variation of thickness of the recording medium can be detected with an optical system including no astigmatism lens installed to cause astigmatism at the light receiving side of the optical pickup. Spherical aberration caused by thickness variation of the recording medium can be corrected by driving the spherical aberration compensation element or the collimating lens along the optical axis according to the detected thickness variation signal.

While this invention has been particularly shown and described with reference to preferred embodiments thereof, it will be understood by those skilled in the art that various changes in form and details may be made thereto without departing from the scope of the invention as defined by the appended claims.

## Claims

1. An optical pickup including a light source (51) for generating and emitting a light beam, an objective lens (57) for focusing an incident light beam from the light source to form a light spot on a recording medium (50), and an optical path changer (55) disposed on the optical path between the light source (51) and the objective lens (57), for altering the traveling path of an incident light beam, the optical pickup comprising;
   a light beam division and detection means (65); and
   a thickness variation detection circuit (70);
   **characterised in that:**

   the light beam division and detection means (65) is a photodetector constructed to divide the cross section of a light beam passed through the objective lens (57) and the optical path changer (55) after having been reflected from the recording medium into a first light beam portion corresponding to the central optical axis and a second light beam portion around the first light beam portion and to separately detect first and second detection signals from the first and second light beam portions; and
   the thickness variation detection circuit (70) is arranged to detect a variation of thickness of the recording medium by subtracting the second detection signal from the first detection signal.

2. The optical pickup of claim 1, wherein the photodetector has first and second light receiving portions (A,B) for dividing the incident light beam into the first and second light beam portions, receiving the first and second light beam portions, and separately and photoelectrically converting the first and second light beam portions.

3. The optical pickup of any of claims 1 through 2, wherein the photodetector (65) is constructed such that the light beam is divided into and detected as a circular or rectangular first light beam portion and second light beam portions surrounding the first light beam portion.

4. The optical pickup of claim 3, wherein the first light beam portion corresponds to 10-90% of the entire incident light beam.

5. The optical pickup of any of claims 1 through 2, wherein the thickness variation detection circuit (70) amplifies (73) at least one of the first and second detection signals with a predetermined gain factor, and then processes (71) the first and second detection signals to detect the thickness variation of the recording medium.

6. An optical pickup including a light source (51) for generating and emitting a light beam, an objective lens (57) for focusing an incident light beam from the light source to form a light spot on a recording medium, and an optical path changer (55) disposed on the optical path between the light source and the objective lens, for altering the traveling path of an incident light beam; the optical pickup comprising:

   a light beam division and detection means (65); and
   a thickness variation detection circuit (70);

   **characterised in that:**

   the light beam division and detection means (65) is a photodetector constructed to separately divide the cross section of a light beam passed through the objective lens and the optical path changer after having been reflected from the recording medium into a first light beam portion aligned on the optical axis and second and third light beam portions around the first light beam portion, and to separately detect first, second and third detection signals from the first, second and third light beam portions; and
   the thickness variation detection circuit (70) is arranged to detect a variation of thickness of the recording medium by subtracting the sum of the second and third detection signals from the first detection signal.

7. The optical pickup of claim 6, wherein the photodetector (65) has first, second and third light receiving portions for dividing the incident light beam into the first, second and third light beam portions, receiving the first, second and third light beam portions, and separately and photoelectrically converting the first, second and third light beam portions.

8. The optical pickup of any of claims 6 through 7, wherein the thickness variation detection circuit (70) amplifies at least one of the first, second and third detection signals with a predetermined gain factor, and then processes (71) the first, second and third detection signals to detect the thickness variation of the recording medium.

9. The optical pickup of any of claims 1 through 2, and claims 6 through 7, wherein the first light beam portion corresponds to 10-90% of the entire incident light beam.

10. The optical pickup of any of claims 1 through 2, and claims 6 through 7, further comprising a spherical aberration compensation element (75) on the optical path between the optical path changer and the objective lens, for compensating for spherical aberration caused by thickness variation of the recording medium by being driven according to a thickness variation signal produced by the thickness variation detection circuit (70).

11. The optical pickup of any of claims 1 through 2, and claims 6 through 8, further comprising:

a collimating lens (53) on the optical path between the light source (51) and the objective lens (57), for collimating a diverging light beam from the light source; and
an actuator (80) for actuating the collimating lens according to a thickness variation signal detected by the thickness variation detection circuit, such that spherical aberration caused by the thickness variation of the recording medium is compensated for.

**Patentansprüche**

1. Optischer Pickup mit einer Lichtquelle (51) zum Erzeugen und Emittieren eines Lichtstrahls, einer Objektivlinse (57) zum Fokussieren eines einfallenden Lichtstrahls aus der Lichtquelle, um einen Lichtfleck auf einem Aufzeichnungsmedium (50) zu bilden, und einem auf dem optischen Weg zwischen der Lichtquelle (51) und der Objektivlinse (57) angeordneten optischen Wegwechsler (55) zum Ändern des Ausbreitungsweges eines einfallenden Lichtstrahls, wobei der optische Pickup Folgendes umfasst:

ein Lichtstrahlaufteilungs- und -detektionsmittel (65); und
eine Dickeschwankungs-Detektionsschaltung (70);
**dadurch gekennzeichnet, dass**
das Lichtstrahlaufteilungs- und -detektionsmittel (65) ein Fotodetektor ist, der so konstruiert ist, dass er den Querschnitt eines Lichtstrahls, der durch die Objektivlinse (57) und den optischen Wegwechsler (55) geleitet wird, nachdem er von dem Aufzeichnungsmedium reflektiert wurde, in einen der mittleren optischen Achse entsprechenden ersten Lichtstrahlteil und einen zweiten Lichtstrahlteil um den ersten Lichtstrahlteil herum aufteilt und separat ein erstes und ein zweites Detektionssignal aus dem ersten und dem zweiten Lichtstrahlteil detektiert; und
die Dickeschwankungs-Detektionsschaltung (70) dafür ausgelegt ist, durch Subtrahieren des zweiten Detektionssignals von dem ersten Detektionssignal eine Schwankung der Dicke des Aufzeichnungsmediums zu detektieren.

2. Optischer Pickup nach Anspruch 1, wobei der Fotodetektor einen ersten und einen zweiten Lichtempfangsteil (A, B) zum Aufteilen des einfallenden Lichtstrahls in den ersten und den zweiten Lichtstrahlteil, zum Empfangen des ersten und des zweiten Lichtstrahlteils und zum separaten fotoelektrischen Umwandeln des ersten und des zweiten Lichtstrahlteils aufweist.

3. Optischer Pickup nach einem der Ansprüche 1 bis 2, wobei der Fotodetektor (65) so konstruiert ist, dass der Lichtstrahl als kreisförmiger oder rechteckiger erster Lichtstrahlteil und zweiter Lichtstrahlteil, der den ersten Lichtstrahlteil umgibt, aufgeteilt und detektiert wird.

4. Optischer Pickup nach Anspruch 3, wobei der erste Lichtstrahlteil 10-90% des gesamten einfallenden Lichtstrahls entspricht.

**5.** Optischer Pickup nach einem der Ansprüche 1 bis 2, wobei die Dickeschwankungs-Detektionsschaltung (70) das erste und/oder das zweite Detektionssignal mit einem vorbestimmten Verstärkungsfaktor verstärkt (73) und dann das erste und das zweite Detektionssignal verarbeitet (71), um die Dickeschwankung des Aufzeichnungsmediums zu detektieren.

**6.** Optischer Pickup mit einer Lichtquelle (51) zum Erzeugen und Emittieren eines Lichtstrahls, einer Objektivlinse (57) zum Fokussieren eines einfallenden Lichtstrahls aus der Lichtquelle, um einen Lichtfleck auf einem Aufzeichnungsmedium zu bilden, und einem auf dem optischen Weg zwischen der Lichtquelle und der Objektivlinse angeordneten optischen Wegwechsler (55) zum Ändern des Ausbreitungsweges eines einfallenden Lichtstrahls, wobei der optische Pickup Folgendes umfasst:

ein Lichtstrahlaufteilungs- und -detektionsmittel (65); und
eine Dickeschwankungs-Detektionsschaltung (70);
**dadurch gekennzeichnet, dass**
das Lichtstrahlaufteilungs- und -detektionsmittel (65) ein Fotodetektor ist, der so konstruiert ist, dass er den Querschnitt eines Lichtstrahls, der durch die Objektivlinse und den optischen Wegwechsler geleitet wird, nachdem er von dem Aufzeichnungsmedium reflektiert wurde, in einen mit der optischen Achse ausgerichteten ersten Lichtstrahlteil und einen zweiten und einen dritten Lichtstrahlteil um den ersten Lichtstrahlteil herum separat aufteilt und separat ein erstes, ein zweites und ein drittes Detektionssignal aus dem ersten, dem zweiten und dem dritten Lichtstrahlteil detektiert; und
die Dickeschwankungs-Detektionsschaltung (70) dafür ausgelegt ist, durch Subtrahieren der Summe des zweiten und des dritten Detektionssignals von dem ersten Detektionssignal eine Schwankung der Dicke des Aufzeichnungsmediums zu detektieren.

**7.** Optischer Pickup nach Anspruch 6, wobei der Fotodetektor (65) einen ersten, einen zweiten und einen dritten Lichtempfangsteil zum Aufteilen von einfallendem Licht in den ersten, den zweiten und den dritten Lichtstrahlteil, zum Empfangen des ersten, des zweiten und des dritten Lichtstrahlteils und zum separaten und fotoelektrischen Umwandeln des ersten, des zweiten und des dritten Lichtstrahlteils aufweist.

**8.** Optischer Pickup nach einem der Ansprüche 6 bis 7, wobei die Dickeschwankungs-Detektionsschaltung (70) das erste und/oder das zweite und/oder das dritte Detektionssignal mit einem vorbestimmten Verstärkungsfaktor verstärkt und dann das erste, zweite und dritte Detektionssignal verarbeitet (71), um die Dickeschwankung des Aufzeichnungsmediums zu detektieren.

**9.** Optischer Pickup nach einem der Ansprüche 1 bis 2 und 6 bis 7, wobei der erste Lichtstrahlteil 10-90% des gesamten einfallenden Lichtstrahls entspricht.

**10.** Optischer Pickup nach einem der Ansprüche 1 bis 2 und 6 bis 7, ferner mit einem Element (75) zur Kompensation der sphärischen Aberration auf dem optischen Weg zwischen dem optischen Wegwechsler und der Objektivlinse zum Kompensieren von sphärischer Aberration, die durch Dickeschwankung des Aufzeichnungsmediums verursacht wird, indem es gemäß einem durch die Dickeschwankungs-Detektionsschaltung (70) erzeugten Dickeschwankungssignal angesteuert wird.

**11.** Optischer Pickup nach einem der Ansprüche 1 bis 2 und 6 bis 8, ferner umfassend:

eine Kollimationslinse (53) auf dem optischen Weg zwischen der Lichtquelle (51) und der Objektivlinse (57) zum Kollimieren eines divergierenden Lichtstrahls aus der Lichtquelle; und
ein Stellglied (80) zum Betätigen der Kollimationslinse gemäß einem durch die Dickeschwankungs-Detektionsschaltung detektierten Dickeschwankungssignal dergestalt, dass durch die Dickeschwankung des Aufzeichnungsmediums verursachte sphärische Aberration kompensiert wird.

**Revendications**

**1.** Tête de lecture optique, comportant une source lumineuse (51) destinée à produire et à émettre un faisceau lumineux, une lentille objective (57) destinée à focaliser un faisceau lumineux incident émanant de la source lumineuse pour former une tache lumineuse sur un support d'enregistrement (50), et un dispositif (55) de changement de trajet optique, placé sur le trajet optique entre la source lumineuse (51) et la lentille objective (57), destiné à modifier le trajet de propagation d'un faisceau lumineux indicent,
la tête de lecture optique comprenant :

un moyen (65) de séparation et de détection de faisceau lumineux ; et
un circuit (70) de détection de variation d'épaisseur ;
la tête de lecture optique étant **caractérisée en ce que** :

le moyen (65) de séparation et de détection de faisceau lumineux est un photodétecteur conçu pour séparer la section transversale d'un faisceau lumineux ayant traversé la lentille objective (57) et le dispositif (55) de changement de trajet optique après avoir été réfléchi par le support d'enregistrement en une première partie de faisceau lumineux correspondant à l'axe optique central et une deuxième partie de faisceau lumineux entourant la première partie de faisceau lumineux, et pour détecter séparément des premier et deuxième signaux de détection à partir des première et deuxième parties de faisceau lumineux ; et le circuit (70) de détection de variation d'épaisseur sert à détecter une variation d'épaisseur du support d'enregistrement par soustraction du deuxième signal de détection du premier signal de détection.

2. Tête de lecture optique selon la revendication 1, le photodétecteur comportant des première et deuxième parties (A, B) de réception de lumière destinées à séparer le faisceau lumineux incident en les première et deuxième parties de faisceau lumineux, à recevoir les première et deuxième parties de faisceau lumineux et à assurer la conversion séparée et photoélectrique des première et deuxième parties de faisceau lumineux.

3. Tête de lecture optique selon l'une quelconque des revendications 1 ou 2, le photodétecteur (65) étant conçu de telle sorte que le faisceau lumineux soit séparé en des première et deuxième parties de faisceau lumineux circulaires ou rectangulaires et détecté sous cette forme, la deuxième partie de faisceau lumineux entourant la première partie de faisceau lumineux.

4. Tête de lecture optique selon la revendication 3, la première partie de faisceau lumineux représentant entre 10 et 90% de la totalité du faisceau lumineux incident.

5. Tête de lecture optique selon l'une quelconque des revendications 1 ou 2, le circuit (70) de détection de variation d'épaisseur amplifiant (73) d'un gain prédéterminé au moins un des premier et deuxième signaux de détection, puis traitant (71) les premier et deuxième signaux de détection en vue de détecter la variation d'épaisseur du support d'enregistrement.

6. Tête de lecture optique, comportant une source lumineuse (51) destinée à produire et à émettre un faisceau lumineux, une lentille objective (57) destinée à focaliser un faisceau lumineux incident émanant de la source lumineuse pour former une tache lumineuse sur un support d'enregistrement, et un dispositif (55) de changement de trajet optique, placé sur le trajet optique entre la source lumineuse et la lentille objective, destiné à modifier le trajet de propagation d'un faisceau lumineux indicent, la tête de lecture optique comprenant :

un moyen (65) de séparation et de détection de faisceau lumineux ; et
un circuit (70) de détection de variation d'épaisseur ;
la tête de lecture optique étant **caractérisée en ce que** :

le moyen (65) de séparation et de détection de faisceau lumineux est un photodétecteur conçu pour séparer la section transversale d'un faisceau lumineux ayant traversé la lentille objective et le dispositif de changement de trajet optique après avoir été réfléchi par le support d'enregistrement en une première partie de faisceau lumineux alignée sur l'axe optique et des deuxième et troisième parties de faisceau lumineux entourant la première partie de faisceau lumineux, et pour détecter séparément des premier, deuxième et troisième signaux de détection à partir des première, deuxième et troisième parties de faisceau lumineux ; et le circuit (70) de détection de variation d'épaisseur sert à détecter une variation d'épaisseur du support d'enregistrement par soustraction de la somme des deuxième et troisième signaux de détection du premier signal de détection.

7. Tête de lecture optique selon la revendication 6, le photodétecteur (65) comportant des première, deuxième et troisième parties de réception de lumière destinées à séparer le faisceau lumineux incident en les première, deuxième et troisième parties de faisceau lumineux, à recevoir les première, deuxième et troisième parties de faisceau lumineux et à assurer la conversion séparée et photoélectrique des première, deuxième et troisième parties de faisceau lumineux.

**8.** Tête de lecture optique selon l'une quelconque des revendications 6 ou 7, le circuit (70) de détection de variation d'épaisseur amplifiant d'un gain prédéterminé au moins un des premier, deuxième et troisième signaux de détection, puis traitant (71) les premier, deuxième et troisième signaux de détection en vue de détecter la variation d'épaisseur du support d'enregistrement.

**9.** Tête de lecture optique selon l'une quelconque des revendications 1 ou 2, et des revendications 6 ou 7, la première partie de faisceau lumineux représentant entre 10 et 90% de la totalité du faisceau lumineux incident.

**10.** Tête de lecture optique selon l'une quelconque des revendications 1 ou 2, et des revendications 6 ou 7, comprenant en outre un élément (75) de correction d'aberration sphérique, placé sur le trajet optique entre le dispositif de changement de trajet optique et la lentille objective, destiné à corriger l'aberration sphérique due à la variation d'épaisseur du support d'enregistrement en étant actionné en fonction du signal de variation d'épaisseur produit par le circuit (70) de détection de variation d'épaisseur.

**11.** Tête de lecture optique selon l'une quelconque des revendications 1 ou 2, et des revendications 6 à 8, comprenant en outre :

une lentille de collimation (53), placée sur le trajet optique entre la source lumineuse (51) et la lentille objective (57), destinée à collimater un faisceau lumineux divergent émanant de la source lumineuse ; et
un actionneur (80) destiné à actionner la lentille de collimation en fonction d'un signal de variation d'épaisseur détecté par le circuit de détection de variation d'épaisseur de manière à corriger l'aberration sphérique due à la variation d'épaisseur du support d'enregistrement.

# FIG. 1 (PRIOR ART)

# FIG. 2 (PRIOR ART)

# FIG. 3A (PRIOR ART)

(t'=0.7mm)

# FIG. 3B (PRIOR ART)

(t'=0.65mm)

# FIG. 3C (PRIOR ART)

(t'=0.60mm)

# FIG. 3D (PRIOR ART)

(t'=0.55mm)

# FIG. 3E (PRIOR ART)

(t'=0.50mm)

# FIG. 4 (PRIOR ART)

# FIG. 5

# FIG. 6A

# FIG. 6B

# FIG. 6C

# FIG. 7A

FOCUSED POINT VARIATIONS ON
RECORDING MEDIUM

# FIG. 7B

FOCUSED POINT VARIATIONS ON
RECORDING MEDIUM

# FIG. 7C

FOCUSED POINT VARIATIONS ON
RECORDING MEDIUM

# FIG. 8

# FIG. 9

# FIG. 10

# FIG. 11

THICKNESS VARIATIONS OF RECORDING MEDIUM

# FIG. 12

THICKNESS VARIATIONS OF RECORDING MEDIUM

# FIG. 13

# FIG. 14

# FIG. 15

# FIG. 16

# FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1257616 A
- WO 9918466 A
- WO 0039792 A
- EP 0984440 A